Europäisches Patentamt

European Patent Office

Office européen des brevets

(11) Publication number: 0 368 475
A2

# (12) EUROPEAN PATENT APPLICATION

(21) Application number: 89310303.6

(22) Date of filing: 09.10.89

(51) Int. Cl.5: G06F 15/24

(30) Priority: 29.10.88 GB 8825358

(43) Date of publication of application:
16.05.90 Bulletin 90/20

(84) Designated Contracting States:
AT BE CH DE ES FR GB GR IT LI LU NL SE

(71) Applicant: Coats Viyella plc
Bank House 9 Charlotte Street
Manchester M1 4ET(GB)

(72) Inventor: Donald, Gordon Hugh
7 Ennerdale Close
Clitheroe Lancashire BB7 2PH(GB)
Inventor: Hewitt, Jeffrey Lindsay
Paloalto 6 Collegeway
Northwood Middlesex(GB)

(74) Representative: McNeight, David Leslie et al
McNeight & Lawrence Regent House Heaton
Lane
Stockport Cheshire SK4 1BS(GB)

(54) Interactive video system.

(57) An interactive video system for retailing merchandise comprises a database containing data relating to the merchandise, an image store storing images of the merchandise, image retrieval and display means for retrieving and displaying images from the image store, and a control arrangement interconnecting the database, the image store and the image retrieval and display means and having an operator input arrangement and an information output arrangement additional to the image display means. The information output can be a digitised voice reproducing arrangement which outputs stored voice information relevant to an image being currently displayed.

EP 0 368 475 A2

# INTERACTIVE VIDEO SYSTEM

This invention relates to an interactive video system for retailing merchandise.

Interactive video systems are known in which images stored e.g. on video disc can be rapidly retrieved and displayed according to interaction between a programmed computer and an operator.

One such system adapted for use in retailing merchandise is disclosed in British Patent No. 2,177,245 and comprises an image storage arrangement storing images of items being traded, said images being composite images comprising a first image component generated from an article being traded, and a second pictorial component generated by computer software, an image index arrangement connected with the said storage arrangement and containing identifiers for the images therein, an image retrieval arrangement and display means for displaying retrieved images, and a transaction data processing arrangement including a data input arrangement and by which the displayed image identifier is automatically input from the index arrangement.

Experience of the system described in the patent has shown however that further improvements and modifications can be made which will enhance the viability of such systems and make them easier to use and more effective, not only as retailing systems, but also in other directions.

The invention comprises an interactive video system for retailing merchandise comprising :
a database containing data relating to said merchandise;
an image store storing images of said merchandise;
image retrieval and display means for retrieving and displaying images from said image store; and
a control arrangement interconnecting said database, said image store and said images retrieval and display means and having an operator input arrangement and an information output arrangement additional to said image display means.

The said information output arrangement may comprise a digitised voice reproducing arrangement, which may be under the control of the said control arrangement so as to output stored voice information relevant to an image being currently displayed.

The control arrangement may include a touch screen arrangement and the images include touch screen "keys". One of such "keys" may comprise a "voice repeat" key, touching which causes a section of voice information to be repeated. Voice information may be divided into short complete messages and the control arrangement may then be inoperable to interrupt a message.

The system may have more than one input arrangement for control purposes. One input may comprise an alphanumeric keyboard. This is a relatively "user unfriendly" arrangement, however, if it has to be operable by customers, who may have no keyboard skills. However, it is a very flexible arrangement, so far as the scope of data and control input it can handle is concerned, and will be useful as a trained operator input arrangement.

One input may comprise a bar code reader and the system may include printed matter carrying visual information (which may be words and/or pictures) representative of sections of the database and image store and bar codes coding for such sections whereby such sections can be accessed by the bar code reader. Such an arrangement can be useful for selecting categories of merchandise, for example design styles (e.g. in a furniture context, Victorian, contemporary and so on) or materials or bedroom furniture, lounge furniture and so on. A bar code adjacent a picture or verbal description of a category can move the image pointer to the beginning of a sequence relating to that category.

Such printed matter may comprise cards, and the bar code reader may then comprise a swipe reader. Such printed matter may, however, comprise books, brochures, catalogues and the like which cannot be "swiped" and the bar code reader may then be of the wand type. Both kinds may, of course, be provided in the same system.

One input may comprise a "smart card" reader. Such a device may be operable to handle transaction data from customers' cards. It may also be operable to handle retail staff operator training (whether in aspects of the interactive video system or otherwise) by for example keying the system into operator training mode and recording in the "smart card" memory details of training successfully completed for a particular operator and from such details, to activate the system to begin a new training session having regard to the recoded data on training successfully completed.

Of course, one input can comprise a magnetic card swipe reader for handling regular credit card transactions.

The system may also comprise recorder means for recording details of a retailing session. Such recorder means may comprise a video cassette recorder and the control arrangement may include a "session" memory in which image pointers are stored during a session for recall at the end of a session to rerun the program for input to the recorder means. In this way, the images a customer has seen together, of course, with the associated text and voice data, can be recorded for review on a separate, e.g. domestic video casette recorder.

The system may also comprise cash till means, which may be part of the transaction data processing arrangement described in Patent No. 2,177,245 aforementioned.

The various measures referred to may be used individually or in any desired combination to enhance the effectiveness of the system and make it easier for untrained operaters to retrieve information and associated images and carry out a transaction thereon with or without the help of a trained assistant.

One embodiment of an interactive video system according to the invention will now be described with reference to the accompanying drawings, in which :-

Figure 1 is a diagrammatic illustration of a complete system;

Figure 2 is a depiction of a typical "touch screen" image; and

Figure 3 is a view of a barcode swipe reader arrangement;

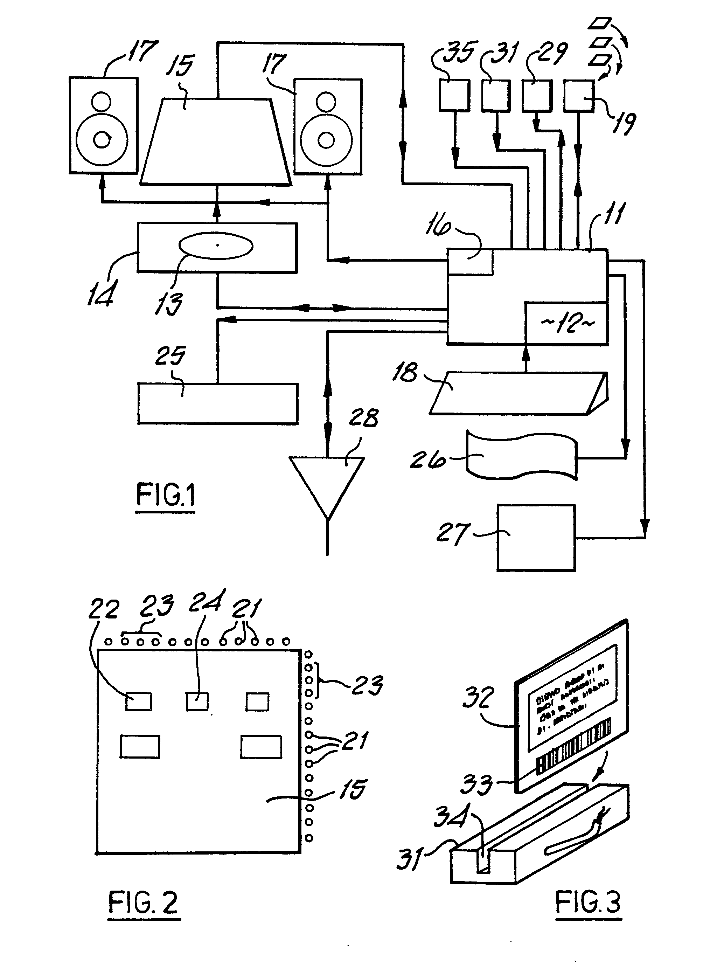

The system illustrated in Figure 1 comprises a computer 11 including a high capacity disc store 12 which contains, inter alia, a database containing data relating to merchandise being marketed, and an image store, namely a video disc 13 storing images of said merchandise.

Thus the video disc 13 may contain images of furniture and furnishings in a range being marketed from a retail establishment, and the database may comprise data relating to such images for example available colours or colourways, stock numbers, quantities in stock, where the stock is held, price, manufacturer, available options and so on.

The system also comprises image retrieval and display means for retrieving and displaying images from the video disc 13, namely video disc player 14 controlled by signals from the computer 11 serving video screen 15.

The computer 11 comprises a control arrangement which interconnects said database, said image store and said image retrieval and display means so that images can be retrieved and displayed and information from the database retrieved for association with the retrieved and displayed images. Such association may take several forms, as will be hereinafter further explained.

The control arrangement, which is to say, the computer 11, has an operator input arrangement comprising various elements as will be hereinafter further explained. It also has an information output arrangement additional to said image display means.

Such additional information output arrangement comprises in this embodiment a digitised voice reproducing arrangement. The digitised voice information is stored as digital data in the computer hard disc memory 12 and reproduced via a digital-to-analogue converter 16 in the computer 11 as stereo audio signals passed to speakers 17.

The voice information can comprise instructions guiding an operator in the use of the system. Thus the voice information may comprise a request associated with a touch screen display to touch a "key" area on the screen to secure a desired result, for example to cause the system to enter one of a number of different modes of operation or to select a given category of images, or it might comprise a description of the displayed image or a recital of factual data concerning the same such as prices, availability and so on.

A primary "user friendly" operator input to the system is a touch screen arrangement. Such an arrangement, illustrated in Figure 2, comprises arrays of sensors 21 along adjacent sides of the screen 22. Touching the screen 15 interrupts light falling on some of the sensors from emitters on the opposite sides of the screen 22. "Key" areas are located on the screen by computer-generated graphics arrangements built into the system, and these key areas include verbal or other indications. A screen may include one or more such key areas. As illustrated, touching key area 22 will interrupt light to sensors 21 on the adjacent sides of the screen 22 contained within the compass of the brackets 23. Touching a different key area 24 will affect other sensors, and the computer will recognise which of the key areas has been touched by sensing which sensors 21 have been blocked.

Thus a plurality of key areas 22,24 and so on can constitute a menu from which items may be selected by touching the screen. A single key area can permit an image sequence to be stepped through.

A "secret" key area, i.e. one not disclosed on the screen but of which its location is known to a trained operator can be used for special trained operator procedures, such, for example, as rapidly restoring the sytsem to an initial state. A special key area can be displayed during an initial part of a session by which "subtitles" copying or summarising voice information can be displayed for the hard-of-hearing.

One key may control a "voice repeat" function in which voice information about a displayed image can be repeated. Voice information can be divided into sections each comprising a short, but complete, message, such, for example, as "The bedspread is offered in a choice of colours, white, red, blue, green and yellow." It may be desired to arrange that such messages are not inerrupted by an input command, e.g. via the touch screen arrangement, but are played out. Each such message may have an end marker that releases an electronic latch arrangement which vetos any touch screen-entered command for so long as the end marker has not been reached. Such message completion arrangements may add realism to the system, by avoiding premature interruption of the current voice message, which would not usually happen in practice in a conversation between purchaser and salesman. The present sytem embodiment quite realistically mimics such a conversation, with the customer's end of it being effect not by speach but by the simple technique of selecting touch screen options by pointing to them.

Other operator inputs and system outputs are used for other communication purposes.

A primary operator input is a conventional keyboard 18 which can be used for a multiplicity of purposes including initial program and data loading and modification. Such purposes would normally be within the realm of trained operators and system supervisors and this important input would not normally be available to retail customers, not all or even many of whom could be expected to have keyboard skills, so that it would constitute a relatively slow method of communication.

Another input comprises bar code reader means, and these can be of two types. A first, 31 (Figure 3), is a swipe reader in which a card 32 bearing a suitably placed bar code 33 is "swiped" through a slot 34. The card 23 contains printed matter in the form of text or pictorial matter and the system can involve a set of cards which may be suitable indexed or just browsed through in order for the customer to select a particular category of merchandise. The relevant card chosen is swiped through the reader 31 in order to instruct the system to display images and related matter pertinent to that selection.

Another type of bar code reader is an optical wand 25 (Figure 1) which can be used to read bar codes printed in books, catalogues and the like that cannot be "swiped" - otherwise, the operation is similar.

Another input arrangement is a magnetic card reader 29 which can handle Access and like cards for billing purposes.

Another type of input, which also involves a system output, is a "smart card" reader 19. "Smart cards" are essentially portable electronic memories which can be credit card size that can be read and written into. In one such commercially available arrangement a smart card reader is simply a small box, connected to the computer, on which a smart card can be placed and is then immediately in communication with the computer. The card may comprise an electronic "key" which can be first of all interrogated electromagnetically upon the card reader's sensing the presence of a smart card to identify the card. According to the coding of the "key" the computer may then switch the system to one or another mode of operation.

A smart card may be issued to a customer and placed on the card reader 19 at the beginning of a session. The customer is at once identified to the computer, the card containing details of the customer's name, address, telephone number, credit rating and any other details that may be pertinent. The card may for example contain account details and be involved in transaction data processing in which, as a result of the session, the customer purchases an item or items of merchandise and the amount of a credit balance contained within the information stored in the card is depleted in accordance with the value of the transaction. The card may also enable the computer 11 to be put into direct contact with a customer's bank account, via a modem to be discussed below automatically to transfer the appropriate funds therefrom into the retail establishment's own account.

Another way in which "smart cards" can be used is in the training of retail personnel both to operate the system and assist customers and in product knowledge. A retail assistant can be assigned a personal "smart card" which will place the system into "training" mode and call up training exercises - using the screen, voice, touch screen and other outputs and the touch screen, keyboard and other inputs - and keep a log, on the "smart card", of such exercises successfully completed so that another training session wil begin with fresh exercises.

Another feature of the system is a video cassette recorder which can be used to prepare a video tape of a retailing session. The various pointers actuated by touch screen or other entries during a session are stored in the computer 11 memory and are available, if required, to re-run the sequences of images and data retrieval called up during the session and transfers the images and associated voice and other outputs as appropriate to the video tape. A customer can take this tape away to review it on a domestic VCR possibly to assess the appropriateness of furnishing fabrics, carpets and like merchandise in the domestic setting, possibly to consult with other family members before confirming a purchase.

A printer 26 can be used to output pricing and size information which is stored in the databank relative to a selected product and also to print transaction details. The printer 26 can of course have a wide range of usefulness - it can be used also to print out stock levels for stock control purposes and details of locations where stocks are held and indeed any information which is held in or acquired by the computer 11.

Cash till means 27 are also connected to the computer 11 for handling cash and cheque transactions.

As in the earlier patent above referred to a modem 28 connects the computer 11 to the outside world and can integrate the system with like systems in other retail establishments and with a computer in a central supervisory office which can control a master databank and operate a centralised accounting and stock control function.

The computer 11 can of course be programmed to operate a stock control system by subtracting items sold from stock lists and comparing residual stock with prescribed re-order levels to warn when stock should be re-ordered or even to prepare and mail out (possibly by "electronic mail" via the modem) orders for depleted stock replenishment. A network of retail outlets can be regarded, for selected stock items for which there is, perhaps, infrequent demand, as a single stock holding unit so that it is not necessary to maintain such stock at all the reatil outlets, merely hold information as to which outlet or outlets of the network hold such stock.

It is, of course, not necessary for any stock to be held at all at the retail establishment, since customer selection can be effected entirely through the medium of the system. Via the modem, details of a completed transaction can be sent to a warehouse to initiate despatch of goods to the customer's address or even to a factory so that the goods (e.g. carpets) can in fact be manufactured.

This concept can be further extended to situations where permanently installed equipment may be impracticable by the use of portable equiment which can be carried by travelling salesmen accessing a central computer via a modem at a customer's premises.

Instead of touch screen techniques, the screen could carry "keys" numbered 0 through 9 corresponding to the buttons on a telephone key pad and such may be used while the telephone is connected to the remote system to indicate customer choice and control the system.

Spreadsheet type programs can also be incorporated enabling calculations e.g. of room size, wallpaper and paint requirements and price the total quantities required and ordered.

Of course, especially in the field of home furnishing, but also in other fields, as described in British Patent No. 2,177,245, images generated directly from merchandise (or perhaps indirectly from pictures e.g. photographs and drawings of merchandise) e.g. by a rostrum camera, can be electronically manipulated and conjoined with images generated by computer programming and graphics, so as to be able to compile a room setting from picture fragments and substitute different wallpaper patterns and colourings with curtain and blind material, carpets, furnishings and so on and to be able to rearrange the disposition of furniture in a room and view it from different perspectives. The database can, for example, include electronically manipulable line drawings of room outlines which can be filled in with rostrum camera generated picture fragments from wallpaper, carpet and so on originals, selections being made from among those available on the video disc until a desired effect is achieved. In accordance with the previous patent, data corresponding to a final selection is input from the databank automatically to generate a customer order (and possibly as mentioned transmit the same to a warehouse or factory).

## Claims

1. An interactive video system for retailing merchandise characterised by comprising :
a database containing data relating to said merchandise;
an image store storing images of said merchandise;
a control arrangement interconnecting said database, said image store and said image retrieval and display means and having an operator input arrangement and an information output arrangement additional to said image display means.

2. A system according to claim 1, characterised in that the said information output arrangement comprises a digitised voice reproducing arrangement.

3. A system according to claim 2, characterised in that the digitised voice reproducing arrangement is under the control of the said control arrangement so as to output stored voice information relevant to an image being currently displayed.

4. A system according to any one of claims 1 to 3, characterised in that the control arrangement includes a touch screen arrangement and the images include touch screen "keys".

5. A system according to claim 4, characterised in that one of the "keys" comprises a "voice repeat" key touching which causes a section of voice information to be repeated.

6. A system according to any one of claims 1 to 5, characterised in that voice information is divided into complete messages and the control arrangement is inoperable to interrupt a message.

7. A system according to any one of claims 1 to 6, characterised by having more than one operator input arrangement.

8. A system according to claim 7, characterised in that one input comprises an alphanumeric keyboard.

9. A system according to claim 7 or claim 8, of which one input comprises a bar code reader and the system includes printed matter carrying visual information representative of sections of the database and image store and bar codes coding for such sections whereby such sections can be accessed by the bar code reader.

10. A system according to claim 9, characterised in that the printed matter comprises cards and the bar code reader is a swipe reader.

11. A system according to claim 9 or claim 10, characterised in that the printed matter comprises books, brochures, catalogues and the like and the bar code reader comprises a wand.

12. A system according to any one of claims 7 to 11, characterised in that one input comprises a "smart card" reader.

13. A system according to claim 12, characterised in that the "smart card" reader is operable to handle transaction data from customers' cards.

14. A system according to claim 11 or claim 12, characterised in that the "smart card" reader is operable to handle retail staff operator training by keying the system into operator training mode and recording in the "smart card" memory details of training successfully completed for a particular oeprator and, for such details, to activate the system to begin a new training session having regard to the recorded data on training successfully completed.

15. A system according to any one of claims 1 to 14, characterised by comprising recorder means for recording details of a retailing session.

16. A system according to claim 15, characterised by said recorder means comprising a video cassette recorder.

17. A system according to claim 15 or claim 16, characterised in that the control arrangement includes a "session" memory in which image pointers are stored during a session for recall at the end of a session to rerun the program for input to the recorder means.

18. A system according to any one of claims 1 to 17, characterised by including cash till means.

FIG.1

FIG. 2

FIG.3